# EUROPÄISCHE PATENTSCHRIFT

(11) **EP 4 477 587 B1**
(45) Veröffentlichungstag und Bekanntmachung des Hinweises auf die Patenterteilung: **30.09.2026**
(21) Anmeldenummer: 24170698.5
(22) Anmeldetag: 17.04.2024
(51) Int. Cl.: B65G 47/61, B65G 9/00, B65G 47/44

(54) **ENTLADESTATION FÜR EINE FÖRDERANLAGE, FÖRDERANLAGE MIT EINER DERARTIGEN ENTLADESTATION UND VERFAHREN ZUM AUTOMATISIERTEN ENTLADEN VON FÖRDERBEHÄLTERN**
UNLOADING STATION FOR A CONVEYOR SYSTEM, CONVEYING SYSTEM WITH SUCH AN UNLOADING STATION AND METHOD FOR AUTOMATICALLY UNLOADING CONVEYOR CONTAINERS
POSTE DE DÉCHARGEMENT POUR UNE INSTALLATION DE TRANSPORT, INSTALLATION DE TRANSPORT DOTÉE D'UN TEL POSTE DE DÉCHARGEMENT ET PROCÉDÉ DE DÉCHARGEMENT AUTOMATISÉ DE RÉCIPIENTS DE TRANSPORT

(30) Priorität: 15.06.2023 DE 102023205635
(43) Veröffentlichungstag der Anmeldung: 18.12.2024
(73) Patentinhaber: Dürkopp Fördertechnik GmbH, 33719 Bielefeld (DE)
(72) Erfinder: Rehm, Pascal, 33617 Bielefeld (DE); Johannesmann, Thomas, 33719 Bielefeld (DE)
(74) Vertreter: Rau, Schneck & Hübner Patentanwälte Rechtsanwälte PartGmbB

(56) Entgegenhaltungen:
- EP-A1- 4 122 849
- EP-B1- 2 709 935
- EP-B1- 2 885 231

## Beschreibung

Die Erfindung betrifft eine Entladestation für eine Förderanlage, eine Förderanlage mit einer derartigen Entladestation sowie ein Verfahren zum automatisierten Entladen von Förderbehältern in einer derartigen Förderanlage.

EP 4 122 849 A1 offenbart eine Entladestation nach dem Oberbegriff des Anspruchs 1.

EP 2 885 231 B1 offenbart eine Tasche für Hängeförderer und eine Taschen-Hängefördereranlage. EP 2 709 935 B1 offenbart eine Förderanlage und eine Transporttasche für eine Förderanlage sowie ein Verfahren zur Beförderung eines Fördergutes.

DE 10 2018 201 676 A1 offenbart Förderbehälter, die hängend transportiert werden. An ihrer Unterseite sind die Förderbehälter automatisiert öffenbar. In einem Offenzustand wird ein Tragvolumen des Förderbehälters nach unten freigegeben, so dass mit dem Förderbehälter geförderte Gegenstände selbsttätig, insbesondere schwerkraftbedingt, aus dem Förderbehälter abgegeben werden. Die Abgabe der Gegenstände ist unkompliziert, aber unkontrolliert.

Der Erfindung liegt die Aufgabe zugrunde, das Entladen derartiger Förderbehälter zu verbessern.

Diese Aufgabe wird durch eine Entladestation mit den Merkmalen des Anspruchs 1, durch eine Förderanlage mit den Merkmalen des Anspruchs 11 und durch ein Verfahren mit den Merkmalen des Anspruchs 12 gelöst.

Der Kern der Erfindung besteht darin, Waren aus hängend geförderten Förderbehältern auf eine Warenabgabefläche abzugeben. Insbesondere werden die Waren unmittelbar auf die Warenabgabefläche abgegeben. Insbesondere gleiten die Waren aus den Förderbehältern schwerkraftbedingt nach unten heraus, nachdem die Förderbehälter mittels einer Öffnungseinheit, insbesondere automatisiert, geöffnet worden sind. Insbesondere ermöglicht die Öffnungseinheit das Öffnen der Förderbehälter in deren Bewegung. Die Förderbehälter werden "im Vorbeifahren" geöffnet. Es ist insbesondere nicht erforderlich, dass die Förderbehälter zum Öffnen gestoppt werden. Der Öffnungsvorgang und die dadurch bewirkte Entladung der Waren erfolgt insbesondere stetig. Die Warenabgabefläche ist an einer Öffnungsposition gegenüber der Horizontalen nach unten abfallend ausgeführt. Die auf die Warenabgabefläche abgegebenen Waren können an der Warenabgabefläche, insbesondere schwerkraftbedingt, abgefördert werden. Insbesondere ist die Warenabgabefläche nach unten geneigt oder mit einer Krümmung nach unten ausgeführt. Die Krümmung kann progressiv oder degressiv ausgeführt sein.

Insbesondere ist die Fallhöhe für die abgegebenen Waren aus den Förderbehältern reduziert. Die Abgabe der Waren ist besonders schonend, Schäden an den Waren sind vermieden.

Insbesondere wurde erkannt, dass die Waren kontrolliert aus den Förderbehältern auf die Warenabgabefläche abgegeben werden. Die Identität der Ware bleibt auch nach deren Abgabe aus dem Förderbehälter auf der Warenabgabefläche bekannt. Insbesondere ist verhindert, dass sich die Reihenfolge der abgegebenen Waren infolge einer unkontrollierten Abgabe ändert. Die erfindungsgemäße Entladestation ermöglicht ein insbesondere automatisiertes und insbesondere vollautomatisches Abgeben der Waren aus den Förderbehältern, insbesondere an andere Fördersysteme und/oder in Transportbehälter, insbesondere an Liegeförderbehälter. Insbesondere ermöglicht die Entladestation eine erhöhte Entladeleistung, die insbesondere mindestens 1000 Waren pro Stunde beträgt.

Die Entladestation weist eine Hängefördertechnik auf mit einer Förderschiene, die in einem Schrägabschnitt von der Horizontalen abweicht. Dazu ist die Förderschiene in einem Linearabschnitt gegenüber der Horizontalen geneigt und/oder in einem Krümmungsabschnitt gegenüber der Horizontalen gekrümmt ausgeführt. Der Krümmungsabschnitt kann progressiv oder degressiv ausgeführt sein. Entlang der Förderschiene ist die Öffnungsposition festgelegt. An der Öffnungsposition ist die Öffnungseinheit angeordnet. Die Öffnungseinheit ist insbesondere benachbart zu der Förderschiene angeordnet und insbesondere an der Förderschiene befestigt. Die Öffnungseinheit ermöglicht das Öffnen der entlang der Förderschiene geförderten Förderbehälter. Die Hängefördertechnik weist einen Förderantrieb auf, mittels dem entlang der Förderschiene Hängeadapter gefördert werden. Die Hängeadapter werden insbesondere mit einer definierten und insbesondere veränderlich einstellbaren Fördergeschwindigkeit gefördert.

Die Förderbehälter sind insbesondere entsprechend der
DE 10 2018 201 676 A1 ausgeführt, worauf hiermit ausdrücklich verwiesen wird. Die Förderbehälter sind insbesondere Hängefördertaschen, die jeweils an einem der Hängeadapter hängend förderbar sind. Die Förderbehälter weisen einen von der Öffnungseinheit betätigbaren Öffnungsmechanismus auf, um eine Unterseite des Förderbehälters, insbesondere automatisiert, zu öffnen. Dadurch wird ein von dem Förderbehälter umgrenztes Tragvolumen im Offenzustand nach unten freigegeben, so dass Waren selbsttätig, insbesondere schwerkraftbedingt, nach unten aus den Förderbehältern abgegeben werden können. Dadurch, dass die Warenabgabefläche an der Öffnungsposition gegenüber der Horizontalen nach unten abfällt, werden die Waren vorteilhaft an der Warenabgabefläche aufgenommen und abgefördert.

Es wurde insbesondere erkannt, dass die in den Förderbehältern geförderten Waren aus den Förderbehältern mit einer Abgabegeschwindigkeit abgegeben werden, die insbesondere im Wesentlichen unabhängig von Größe und Gewicht der Ware ist. Die Abgabegeschwindigkeit ist im Wesentlichen für sämtliche Waren gleich groß. Der Entladevorgang ist verfahrenstechnisch robust und insbesondere vorteilhaft automatisierbar.

Insbesondere wurde erkannt, dass die Waren an der Entladestation mittels der Warenabgabefläche vorteilhaft in ihrer räumlichen Lage umorientiert werden, insbesondere aus einer überwiegend vertikalen Ausrichtung in den Förderbehältern in eine überwiegend horizontale Ausrichtung in einem nachfolgenden Fördersystem und/oder in Transportbehältern. Die horizontale Ausrichtung ist für die automatisierte Weiterverarbeitung der abgegeben Waren besonders vorteilhaft.

Eine Entladestation, bei der an der Warenabgabefläche eine Seitenführung für die Förderbehälter angeordnet ist, ermöglicht eine erhöhte Zuverlässigkeit bei der Warenabgabe. Eine Seitenführung, insbesondere in Form seitlicher Führungsstege an der Warenabgabefläche, gewährleistet eine Seitenstabilisierung der Förderbehälter. Ein unerwünschtes seitliches Pendeln der Förderbehälter ist verhindert.

Eine Entladestation gemäß Anspruch 2 ermöglicht eine vorteilhafte Aufnahme der Waren an der Warenabgabefläche. Als erster Neigungswinkel wird die negative Steigung der Warenabgabefläche an der Öffnungsposition verstanden. Wenn die Warenabgabefläche an der Öffnungsposition nach unten geneigt ist, ist dort ein linearer Neigungsabschnitt ausgebildet. Bei einer gekrümmten Ausführung der Warenabgabefläche an der Öffnungsposition ist der erste Neigungswinkel als Tangente an der Öffnungsposition zu verstehen. Der erste Neigungswinkel beträgt mindestens 45°, insbesondere mindestens 60°, insbesondere mindestens 75° und insbesondere mindestens 80°. Um trotzdem ein stabiles Aufliegen der abgegebenen Ware der Warenabgabefläche sicherzustellen, ist es vorteilhaft, wenn der erste Neigungswinkel kleiner ist als 90° und insbesondere höchstens 80° und insbesondere höchstens 85° beträgt.

Es wurde erkannt, dass die Aufnahme der Waren umso stabiler ist, je steiler die Warenabgabefläche an der Öffnungsposition nach unten geneigt ist. Die anschließende Umorientierung der räumlichen Lage der Waren kann unkompliziert bei geeigneter Ausgestaltung der Warenabgabefläche erfolgen.

Eine Entladestation gemäß Anspruch 3 ermöglicht eine besonders schonende Abgabe der Waren aus den Förderbehältern. Insbesondere können die Waren unmittelbar aus dem jeweiligen Förderbehälter auf die darunter angeordnete Warenabgabefläche gleiten. Die Fallhöhe ist minimiert. Ein auf die Waren beim Auftreffen auf die Warenabgabefläche wirkender Impuls ist minimiert. Insbesondere berühren die Förderbehälter im ungeöffneten Zustand, insbesondere stromaufwärts der Öffnungsposition, die Warenabgabefläche.

Es wurde erkannt, dass die Abgabe der Waren auch dadurch verbessert ist, dass durch den Kontakt der Förderbehälter mit der Warenabgabefläche eine unerwünschte Pendelbewegung der Förderbehälter minimiert und insbesondere verhindert ist. Die Förderbehälter werden durch den Kontakt an der Warenabgabefläche beruhigt. Die Abgabe der Waren ist dadurch zusätzlich verbessert. Das Risiko einer unkontrollierten Warenabgabe ist vermindert. Vorteilhaft ist es, wenn die Förderbehälter an ihrer Unterseite mit Schließleisten ausgeführt sind, die insbesondere aus einem Material ausgeführt sind, das eine Eigensteifigkeit aufweist. Die Schließleisten sind stabil ausgeführt. Mit den Schließleisten kann der jeweilige Förderbehälter linienartig an der Warenabgabefläche anliegen. Die Förderung der Förderbehälter entlang der Warenabgabefläche ist dadurch zusätzlich stabilisiert.

Es ist alternativ auch möglich, dass der Vertikalabstand derart bemessen ist, dass die Förderbehälter im ungeöffneten Zustand vertikal beabstandet zu der Warenabgabefläche, also berührungsfrei, angeordnet sind. Durch die vertikale Beabstandung können die Förderbehälter reibungsfrei entlang der Warenabgabefläche gefördert werden. Die vertikale Beabstandung ist insbesondere derart klein, dass ein Pendeln der Förderbehälter entlang der Förderrichtung im Wesentlichen unterbunden wird, wenn die Förderbehälter entgegen der Förderrichtung nach hinten bereits bei kleinen Pendelwinkeln die Warenabgabefläche berühren. Ein unerwünschtes Pendeln ist in diesem Fall - trotz berührungsfreier Anordnung des Förderbehälters gegenüber der Warenabgabefläche in einem pendelfreien Zustand - zuverlässig verhindert. Ein kleiner Pendelwinkel beträgt insbesondere höchstens 5°, insbesondere höchstens 3° und insbesondere höchstens 1° bezogen auf eine Pendelachse, die insbesondere durch die Rollachse der Tragrollen des Hängeadapters definiert ist.

Bei der Abgabe der Waren gemäß Anspruch 4 ist die Genauigkeit zusätzlich verbessert. Entlang eines Parallelabschnitts der Förderschiene ist der Vertikalabstand zwischen der Förderschiene und der Warenabgabefläche konstant. Vorteilhaft ist es, wenn die Förderschiene entlang des Parallelabschnitts linear verläuft. Ein gekrümmter Verlauf entlang des Parallelabschnitts für Förderschiene und Warenabgabefläche ist auch möglich. Die Öffnungsposition ist insbesondere innerhalb des Parallelabschnitts angeordnet.

Zusätzlich oder alternativ zu dem Parallelabschnitt kann die Förderschiene einen Annäherungsabschnitt aufweisen. Entlang des Annährungsabschnitts wird der Vertikalabstand der Förderschiene bezüglich der Warenabgabefläche reduziert, insbesondere linear reduziert. Die Reduzierung kann auch nicht-linear erfolgen, insbesondere progressiv oder degressiv. Es wurde gefunden, dass eine Ausrichtung der Förderbehälter bezüglich der Warenabgabefläche dadurch verbessert ist. Insbesondere kann die Ausrichtung der Förderbehälter bezüglich der Warenabgabefläche erzwungen werden. Die Verkleinerung des Vertikalabstands beträgt entlang des Annäherungsabschnitts höchstens 15 %, insbesondere höchstens 10 %, insbesondere höchstens 5 % und insbesondere höchstens 3 %.

Die Ausführung der Warenabgabefläche gemäß Anspruch 5 ist besonders unkompliziert. Insbesondere weist die Warenabgabefläche keine beweglichen Teile auf. Die Warenabgabefläche hat insbesondere eine oben angeordnete Gleitfläche. Die Warenabgabefläche ist insbesondere als Rutsche ausgeführt und kann insbesondere an ihrer Oberfläche einen dafür geeigneten Kunststoffbelag aufweisen. Der Kunststoffbelag kann auf einem Trägermaterial angeordnet sein, das insbesondere ein Metallblech und insbesondere Stahlblech ist. Der Kunststoffbelag ist insbesondere aus thermoplastischem Kunststoffmaterial und insbesondere Polyethylen und insbesondere ultrahochmolekularem Polyethylen, insbesondere PE-1000. Das Kunststoffmaterial hat eine hohe Abriss- und Verschleißfestigkeit, gute Gleiteigenschaften, eine hohe Beständigkeit, ist temperaturbeständig und ermöglicht eine gute Geräuschdämpfung.

Ein Übergabeabschnitt gemäß Anspruch 6 ermöglicht eine unkomplizierte und unmittelbare Übergabe der Waren von der Warenabgabefläche an ein nachfolgendes Fördersystem und/oder in Transportbehälter. Die Waren werden, insbesondere schonend, in die überwiegend horizontale Ausrichtung überführt und an ein nachfolgendes Fördersystem oder Transportbehälter abgegeben. Die räumliche Umorientierung der Waren ist mechanisch robust ausgeführt. Insbesondere folgen die Waren einer stetigen und kontinuierlichen Förderbahn. Das Risiko einer unkontrollierten und unerwünschten Lageänderung der Waren ist minimiert und insbesondere ausgeschlossen. Eine kontinuierliche Weiterförderung der abgegebenen Waren ist gewährleistet. Der Übergabeabschnitt ist gegenüber der Horizontalen insbesondere mit einem zweiten Neigungswinkel geneigt angeordnet, der insbesondere kleiner ist als der erste Neigungswinkel der Warenabgabefläche an der Öffnungsposition. Der zweite Neigungswinkel beträgt insbesondere höchstens 10°, insbesondere höchsten 5°, insbesondere höchstens 1°.

Denkbar ist auch, dass der Übergabeabschnitt parallel zur Horizontalen angeordnet ist. Der Übergabeabschnitt kann zusätzlich oder alternativ zumindest abschnittsweise auch gekrümmt ausgeführt sein.

Die Warenabgabefläche gemäß Anspruch 7 ermöglicht eine aktive Förderung der Waren zusätzlich zu der schwerkraftbedingten Hangabtriebskraft. Die Waren können unmittelbar auf einem Abwärtsförderer liegend und/oder in separaten Liegeförderbehälter gefördert werden, in die die Waren abgegeben werden. Der Abwärtsförderer ermöglicht eine aktive Abwärtsförderung der abgegebenen Waren entlang der Warenabgabefläche. Die aus den Förderbehältern abgegebenen Waren werden mittels des Abwärtsförderers aktiv aus den Förderbehältern abgezogen. Das Risiko eines unbeabsichtigten Stauens oder Verhakens der Waren an den Förderbehältern ist dadurch reduziert. Die Abgabe der Waren ist dadurch besonders robust.

Der Abwärtsförderer gemäß Anspruch 8 ermöglicht eine erhöhte Flexibilität bei der Warenabgabe. Insbesondere kann eine Differenzgeschwindigkeit zwischen dem Abwärtsförderer und den Förderbehältern der Hängefördertechnik eingestellt werden, um die Abgabe der Waren aus den Förderbehältern zu verbessern. Die Differenzgeschwindigkeit ist insbesondere so eingestellt, dass die Geschwindigkeit des Abwärtsförderers größer ist als die Geschwindigkeit der Förderbehälter, wobei die Geschwindigkeit des Abwärtsförderers höchstens 20 % größer ist als die Geschwindigkeit der Förderbehälter, höchstens 15 %, höchstens 10 % und insbesondere höchstens 5 %.

Die Ausführung der Öffnungseinheit gemäß Anspruch 9 ermöglicht eine zielgerechte Warenabgabe. Insbesondere ist es dadurch möglich, dass Waren gezielt nicht abgegeben werden und die Förderbehälter im ungeöffneten Zustand an der Öffnungsposition vorbei gefördert werden. Die schaltbare Öffnungseinheit steht insbesondere mit einer Steuerungseinheit in Signalverbindung. Die Steuerungseinheit übermittelt ein Stellsignal an die Öffnungseinheit. In Abhängigkeit des Stellsignals werden die an der Öffnungsposition befindlichen Förderbehälter geöffnet oder passieren ungeöffnet die Öffnungsposition.

Eine Entladestation gemäß Anspruch 10 ermöglicht eine vorteilhafte Warenabgabe. Insbesondere kann die Entladestation mit einem hohen Warendurchsatz betrieben werden. Dadurch, dass die Förderschiene in dem Schrägabschnitt gegenüber der Horizontalen nach unten abfällt, kann der Abstand zwischen zwei in Förderrichtung hintereinander angeordneten Förderbehältern reduziert werden. Die Förderbehälter werden mit einer vergleichsweise hohen Dichte gefördert. Insbesondere ist die Förderschiene in dem Linearabschnitt gegenüber der Horizontalen nach unten geneigt und/oder in dem Krümmungsabschnitt gegenüber der Horizontalen nach unten gekrümmt.

Es ist alternativ möglich, dass der Schrägabschnitt entlang der Förderrichtung des Förderantriebs nach oben geneigt und/oder nach oben gekrümmt ausgeführt ist. Die Förderrichtung der abgegebenen Waren entlang der Warenabgabefläche weist insbesondere eine Horizontalkomponente auf, die im Wesentlichen entgegen einer Horizontalkomponente der Förderrichtung der Förderbehälter orientiert ist.

Eine Förderanlage gemäß Anspruch 11 weist im Wesentlichen die Vorteile der Entladestation auf, worauf hiermit verwiesen wird. Mit einer derartigen Förderanlage können Waren, die mit einer Hängefördertechnik zuvor in Förderbehältern, insbesondere vereinzelt, hängend gefördert worden sind, nachfolgend mittels eines Liegeförderers und insbesondere in Liegeförderbehältern, weitergefördert und insbesondere weiterverarbeitet werden. Insbesondere ermöglicht eine derartige Förderanlage eine automatisierte und insbesondere vollautomatische Handhabung und Verarbeitung der Waren. Die Förderanlage ist insbesondere eine Hängeförderanlage.

Ein Verfahren gemäß Anspruch 12 ermöglicht die Vorteile der Entladestation gemäß Anspruch 1, worauf hiermit verwiesen wird.

Ein Verfahren gemäß Anspruch 13 gewährleistet eine stabile Warenentladung. Die Förderbehälter sind seitlich und insbesondere an ihrer Unterseite an der Warenabgabefläche geführt, durch Kontakt an der Seitenführung und insbesondere durch Kontakt an der Warenabgabefläche.

Ein geschaltetes Öffnen gemäß Anspruch 14 ermöglicht einen zielgerichteten und automatisierten Entladeprozess. Insbesondere wird das hierfür erforderliche Stellsignal von einer Steuerungseinheit bereitgestellt. Die Steuerungseinheit erzeugt das Stellsignal insbesondere auf Basis der Identifikationsdaten der Förderbehälter, die insbesondere mittels einer Identifikationseinrichtung, die entlang der Fördertechnik angeordnet ist, erfasst worden sind. Zur Identifikation dienen insbesondere maschinenlesbare Codes, insbesondere Strichcodes, QR-Codes oder Transponderleser, die RFID-Datenträger lesen können. Die maschinenlesbaren Codes sind insbesondere an den Hängeadaptern angeordnet und/oder darin integriert.

Sowohl die in den Patentansprüchen angegebenen Merkmale als auch die in dem nachfolgenden Ausführungsbeispiel einer Förderanlage angegebenen Merkmale sind jeweils für sich allein oder in Kombination miteinander geeignet, den erfindungsgemäßen Gegenstand weiterzubilden. Die jeweiligen Merkmalskombinationen stellen hinsichtlich der Weiterbildungen des Erfindungsgegenstandes keine Einschränkung dar, sondern weisen im Wesentlichen lediglich beispielshaften Charakter auf.

Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: eine schematische Darstellung einer Förderanlage,
- Fig. 2: eine perspektivische Ansicht eines Förderbehälters der Förderanlage in Fig. 1,
- Fig. 3: eine perspektivische Ansicht einer Entladestation für die Förderbehälter gemäß Fig. 2.

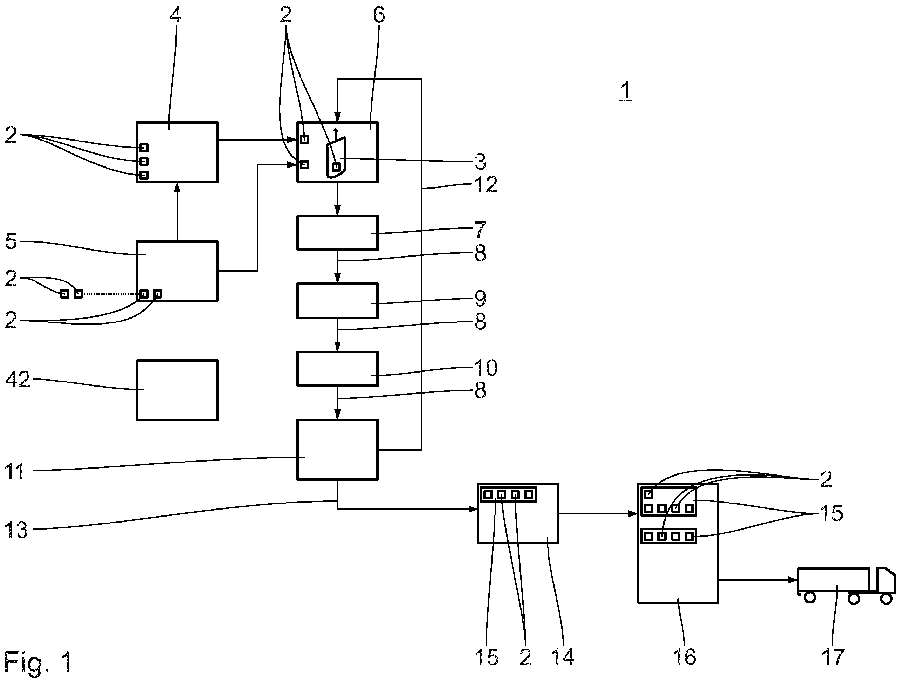

Eine in Fig. 1 als Ganzes mit 1 gekennzeichnete Förderanlage ist eine Hängeförderanlage und dient zum Fördern und/oder Transportieren von Waren 2. Die Waren 2 werden in der Förderanlage 1, insbesondere vereinzelt, in Förderbehältern 3 hängend gefördert.

Die Waren 2 sind beispielsweise in Tüten verpackte Kleidungsstücke oder in anderen Transportbehältnissen, insbesondere Kartons, verpackte Waren, beispielsweise aus dem Bereich des Online-Handels, dem sogenannten E-Commerce.

Die Förderanlage 1 umfasst ein Warenlager 4, in dem die Waren 2 eingelagert sind. Das Warenlager 4 kann als manuelles Lager oder als automatisches Lager ausgeführt sein. Die Förderanlage 1 weist ferner einen Wareneingang 5 auf, an dem die Waren 2 der Förderanlage 1, insbesondere von Extern, zugeführt werden. Dem Wareneingang 5 können auch Retourenwaren zugeführt werden. Der Wareneingang 5 ist fördertechnisch mit dem Warenlager 4 verbunden. Die fördertechnische Verbindung ist beispielsweise ein Förderband oder eine manuelle Zubringung der Waren 2, die insbesondere auch in Gebinden im Wareneingang 5 vorliegen können, zu dem Warenlager 4.

Die Förderanlage 1 umfasst ferner eine Beladestation 6, an der die Waren 2 in die Förderbehälter 3 geladen werden. Die Beladestation 6 ist sowohl mit dem Warenlager 4 als auch mit dem Wareneingang 5 jeweils unabhängig fördertechnisch verbunden. Mittels der fördertechnischen Verbindung können die Waren 2 aus dem Warenlager 4 und/oder aus dem Wareneingang 5 zu der Beladestation 6 gefördert werden. Die Waren 2 können von dem Warenlager 4 und/oder von dem Wareneingang 5 auch manuell zu der Beladestation 6 gefördert werden.

Die Förderanlage 1 umfasst eine Vorrichtung 7 zum Aufgeben der beladenen Förderbehälter 3 in eine Hängefördertechnik 8. Die Vorrichtung 7 ist an die Hängefördertechnik 8 fördertechnisch angeschlossen und damit verbunden. Die Hängefördertechnik 8 ist Teil der Förderanlage 1.

Die Förderanlage 1 umfasst einen Warenspeicher 9, der insbesondere als Umlaufspeicher ausgeführt ist und insbesondere zum Zwischenspeichern der beladenen Förderbehälter 3 dient.

Die Förderanlage 1 weist ferner eine optionale Sortiereinheit 10 auf, die zum Sortieren der beladenen Förderbehälter 3, also zum Verändern der Reihenfolge der Förderbehälter 3 im Warenstrom, dient. Die Sortiereinheit 10 kann mehrere parallel und/oder in Reihe angeordnete Staustrecken und/oder einen oder mehrere Umlaufkreisel aufweisen. Zusätzlich oder alternativ kann die Sortiereinheit 10 als Matrixsorter ausgeführt sein.

Die Förderanlage 1 weist mindestens eine Entladestation 11 auf, an der die Waren 2 aus den Förderbehältern 3 entladen werden. Je Sortiereinheit 10 können mehrere, insbesondere drei oder fünf, Entladestationen 11 vorhanden sein. Insbesondere kann jede an die Sortiereinheit 10 angeschlossene Entladestation 11 von jedem Umlaufkreisel der Sortiereinheit 10 erreicht werden. In der Entladestation 11 werden mittels der Waren 2 beladenen Förderbehälter 3, insbesondere automatisiert, geöffnet und entladen.

Die in der Entladestation 11 entleerten Förderbehälter 3 werden über eine Rückführstrecke 12 in der Förderanlage 1 zurückgeführt und insbesondere der Beladestation 6 als Leertaschen zum erneuten Beladen mit Waren 2 zur Verfügung gestellt. Die entleerten Förderbehälter 3 können auch in einem nicht dargestellten Leertaschen-Speicher zwischengespeichert werden. Die Rückführstrecke 12 kann zusätzlich auch an das Warenlager 4, den Wareneingang 5, den Warenspeicher 9 und/oder die Sortiereinheit 10 fördertechnisch angeschlossen sein. An der Entladestation 11 nicht geleerte Förderbehälter 3 können entsprechend dem Warenlager 4, dem Wareneingang 5, dem Warenspeicher 9 und/oder der Sortiereinheit 10 zur weiteren Verwendung zugeführt werden.

Die Entladestation 11 ist mittels eines Liegeförderers 13 fördertechnisch mit mindestens einer Packstation 14 verbunden. An der Packstation 14 werden die Waren 2 zu einem versandfertigen Auftrag 15 gepackt. Die Packstation 14 ist mit einem Warenausgang 16 fördertechnisch verbunden. Über den Warenausgang 16 können die Aufträge 15 mit den Waren 2 die Förderanlage 1 verlassen. Aufträge 15 aus dem Warenausgang 16 können mittels externer Transportmittel 17, insbesondere Transportfahrzeuge, insbesondere Lastkraftwagen, abtransportiert werden.

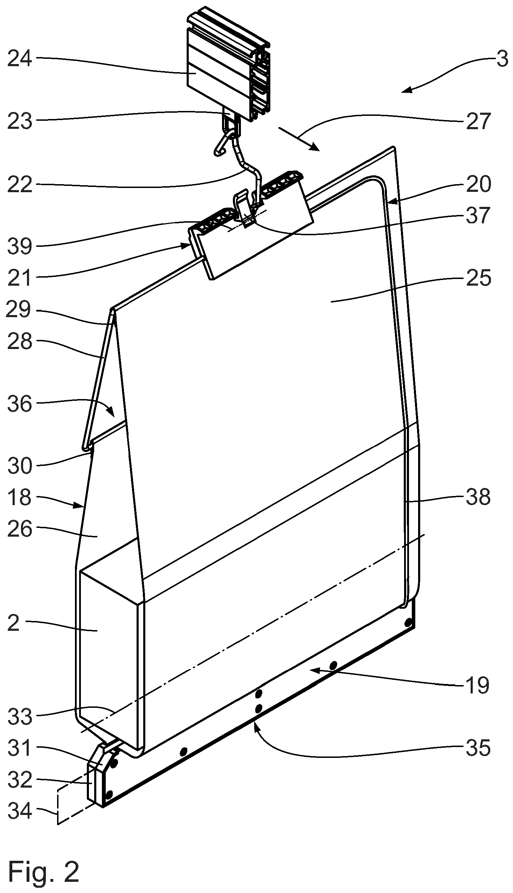

Im Folgenden wird unter Bezugnahme auf Fig. 2 der Förderbehälter 3 näher erläutert.

Der Förderbehälter 3 ist insbesondere eine Transporttasche oder eine Hängefördertasche. Derartige Hängefördertaschen sind beispielsweise bekannt aus DE 10 2018 201 676 A1, auf die bezüglich der Konstruktion und der Funktion der Hängefördertaschen ausdrücklich verwiesen wird.

Die Förderbehälter 3 weisen eine Tragwand 18, eine Verschlusseinrichtung 19, eine Betätigungseinrichtung 20 und eine Aufhängeeinrichtung 21 auf.

Die Aufhängeeinrichtung 21 ist an der Tragwand 18 angebracht. Die Aufhängeeinrichtung 21 umfasst einen Transporthaken 22 zum Befestigen des Förderbehälters 3 an einem Hängeadapter 23 einer Förderschiene 24. Die Förderschiene 24 ist Teil der Hängefördertechnik 8. Der Hängeadapter 23 ist mittels nicht dargestellter Tragrollen um deren Rollenachsen schwenkbar in der Förderschiene 24 angeordnet. Die Tragrollen bewirken insbesondere auch eine Führung der Hängeadapter 23 entlang der Förderschiene 24. Der Hängeadapter 23 ist entlang der Förderschiene 24 linear verlagerbar. Bei der Verlagerung kann der Hängeadapter 23 an den Tragrollen abrollen. Der Hängeadapter 23 wird auch als Rolladapter bezeichnet. Mittels eines nicht separat dargestellten Förderantriebs kann der Hängeadapter 23 zusammen mit dem daran hängend angeordneten Förderbehälter 3 entlang der Förderschiene 24 gefördert werden.

Die Tragwand 18 weist eine Vorderwand 25 und eine Rückwand 26 auf. Die Vorderwand 25 ist entlang einer Transportrichtung 27 vorne und die Rückwand 26 ist entlang der Transportrichtung 27 hinten an dem Förderbehälter 3 angeordnet. Die Vorderwand 25 ist über einen Beladerahmen 28 an der Aufhängeeinrichtung 21 angebracht. Hierzu weist die Vorderwand 25 an ihrer Oberseite eine Rahmenschlaufe 29 auf. Eine Vorderseite des Beladerahmens 28 erstreckt sich durch die Rahmenschlaufe 29 der Vorderwand 25 hindurch. Eine Oberseite der Rückwand 26 ist über eine weitere Rahmenschlaufe 30 an einer Rückseite des Beladerahmens 28 angebracht. Die Vorderwand 25 und die Rückwand 26 sind somit über den Beladerahmen 28 an der Aufhängeeinrichtung 21 angebracht.

Die Verschlusseinrichtung 19 weist eine Vorder-Schließleiste 31 und eine Hinter-Schließleiste 32 auf. Die Verschlusseinrichtung 19 weist eine parallel zu einer Längsachse 33 des Förderbehälters 3 orientierte Haupterstreckung auf. Die Verschlusseinrichtung 19 überragt die Tragwand 18 entlang der Längsachse 33 zu beiden Seiten. Die Unterseite der Vorderwand 25 ist an der Vorder-Schließleiste 31 angebracht. Die Unterseite der Rückwand 26 ist an der Hinter-Schließleiste 32 angebracht. Der Förderbehälter 3 weist eine vertikal und parallel zu der Längsachse 33 orientierte Mittelebene 34 auf.

Gemäß Fig. 2 ist der Förderbehälter 3 in einem Verschlusszustand dargestellt. Eine Unterseite der Vorderwand 25 ist über die Verschlusseinrichtung 19 mit einer Unterseite der Rückwand 26 verbunden. Im Verschlusszustand ist der Förderbehälter 3 an einer Unterseite 35 verschlossen. Die Vorder-Schließleiste 31 ist an der Hinter-Schließleiste 32 befestigt. Die Tragwand 18 begrenzt ein Tragvolumen 36 nach vorne, nach hinten und nach unten. Die Vorder-Schließleiste 31 kontaktiert die Hinter-Schließleiste 32 im Bereich der Mittelebene 34. Die Vorderwand 25 und die Rückwand 26 sind aus einem textilen Material und insbesondere formflexibel ausgebildet. Die in dem Tragvolumen 36 angeordneten Waren 2 befinden sich aufgrund der Schwerkraft an der Unterseite der Tragwand 18. Die Waren 2 sind in dem Tragvolumen 36 im Wesentlichen vertikal orientiert. Aufgrund der flexiblen, insbesondere biegeweichen, Ausbildung der Tragwand 18 nimmt diese eine der Form der Waren 2 entsprechende Form an. Die Waren 2 werden somit fest in dem Tragvolumen 36 gehalten.

Der Verschlusseinrichtung 19 weist einen nicht näher dargestellten Riegelmechanismus auf, der eine lösbar verriegelte Anordnung der Vorder-Schließleiste 31 und der Hinter-Schließleiste 32 miteinander ermöglicht. Der Riegelmechanismus der Verschlusseinrichtung 19 ist mittels der Betätigungseinrichtung 20 betätigbar. Die Betätigungseinrichtung 20 umfasst ein Betätigungsmittel 37 und ein Übertragungsmittel 38. Die Betätigungseinrichtung 20 ist zum Lösen der Verbindung zwischen der Vorder-Schließleiste 31 und der Hinter-Schließleiste 32 ausgebildet, also zum Lösen einer Verbindung zwischen der Vorderwand 25 und der Rückwand 26.

Das Betätigungsmittel 37 ist als Betätigungshebel ausgebildet. Betätigungsmittel 37 ist an der Aufhängeeinrichtung 21 um eine parallel zu der Längsachse 33 orientierte Hebelachse 39 drehbar gelagert.

Das Betätigungsmittel 37 steht in mechanischer Wirkverbindung mit dem Übertragungsmittel 38, das als Bowdenzug ausgebildet ist. Das Übertragungsmittel 38 erstreckt sich von der Aufhängeeinrichtung 21 zu der Verschlusseinrichtung 19. Das Übertragungsmittel 38 dient zum Übertragen einer Betätigungskraft von dem Betätigungsmittel 37 auf die Riegelanordnung der Verschlusseinrichtung 19.

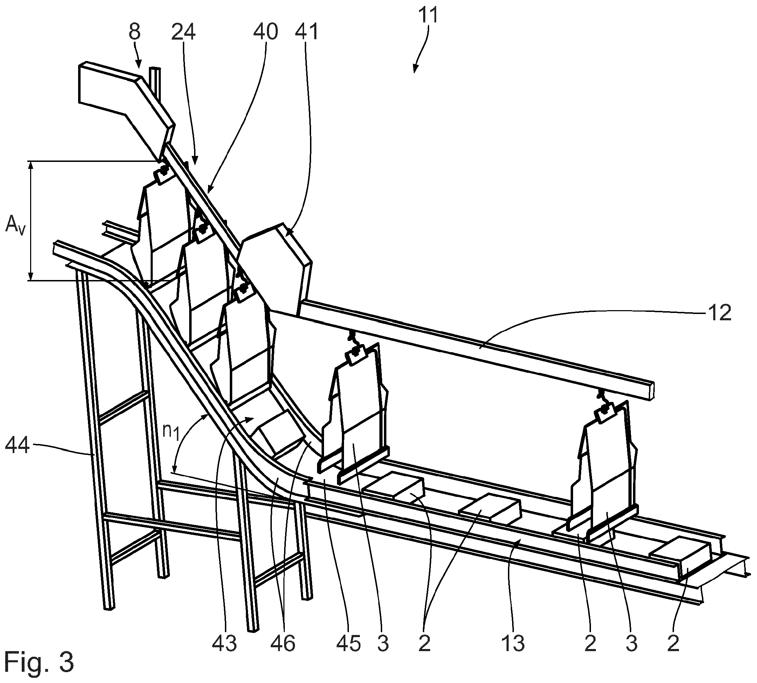

Nachfolgend wird anhand von Fig. 3 die Entladestation 11 näher erläutert.

Die Entladestation 11 ist fördertechnisch mit der Hängefördertechnik 8 gekoppelt. Mit der Hängefördertechnik 8 werden, insbesondere mit Waren 2 beladene, Förderbehälter 3 entlang einer Förderschiene 24 hängend gefördert und der Entladestation 11 zugeführt. Im Bereich der Entladestation 11 weist die Förderschiene 24 einen Linearabschnitt 40 auf, der gegenüber der Horizontalen nach unten abfällt, also nach unten geneigt angeordnet ist.

Entlang des Linearabschnitts 40 ist an einer Öffnungsposition eine schaltbare Öffnungseinheit 41 angeordnet. Die Öffnungseinheit 41 weist ein nicht näher dargestelltes Öffnungsmittel auf, das mit dem Betätigungsmittel 37 des Förderbehälters 3 zusammenwirken kann. Die Öffnungseinheit 41 steht mit einer in Fig. 1 rein schematisch dargestellten Steuerungseinheit 42 in Signalverbindung.

An die Förderschiene 24 der Hängefördertechnik 8 schließt sich in Transportrichtung 27 die Rückführstrecke 12 an.

Unterhalb der Förderschiene 24 ist an der Entladestation 11 eine Warenabgabefläche 43 angeordnet. Die Warenabgabefläche 43 dient zum Abgeben von aus den Förderbehältern 3 abgegebener Waren 2. Die Warenabgabefläche 43 ist insbesondere an der Öffnungsposition gegenüber der Horizontalen nach unten abfallend ausgeführt. An der Öffnungsposition ist die Warenabgabefläche 43 gegenüber der Horizontalen mit einem ersten Neigungswinkel n₁ nach unten geneigt ausgeführt. Der erste Neigungswinkel beträgt gemäß dem gezeigten Ausführungsbeispiel 60°.

In Abhängigkeit eines Vertikalabstandes A_{V} zu der Förderschiene 24 kann die Warenabgabefläche 43, wie in Fig. 3 dargestellt, an einem Halterahmen 44 angeordnet und auf dem Untergrund abgestellt sein. Der Halterahmen 44 ist insbesondere fachwerkartig und insbesondere aus standardisierten Rahmenelementen, hergestellt. Der Halterahmen ist leicht bauend und modular ausgeführt. Der Halterahmen 44 ist robust und in sich versteift.

Die Warenabgabefläche 43 ist gemäß dem gezeigten Ausführungsbeispiel statisch ausgeführt als Gleitfläche. Die Gleitfläche weist bezüglich der abzugebenden Waren 2 einen niedrigen Reibwert auf, der insbesondere zwischen 0,15 und 0,5 beträgt. Die Gleitfläche ist insbesondere aus einem Material hergestellt, das verschleißarm und maßstabil ist, insbesondere bezüglich äußerer Temperatur- und Feuchtigkeitseinflüsse. Das für die Gleitfläche verwendete Material weist insbesondere ein gutes mechanisches Dämpfungsvermögen auf und ermöglicht insbesondere eine gute Geräuschdämpfung. Die Warenabgabefläche 43 bildet eine Rutsche mit einem robusten Kunststoffbelag, entlang dem die aus den Förderbehältern 3 abgegebenen Waren 2 schonend nach unten gleiten können. Als Kunststoffbelag dient insbesondere thermoplastisches Kunststoffmaterial, insbesondere Polyethylen und insbesondere ultrahochmolekulares Polyethylen, das als PE-UHMW oder als PE-1000 bezeichnet wird. Andere Kunststoffmaterialien, insbesondere Polyamid, sind zusätzlich oder alternativ möglich.

Aus Stabilitätsgründen kann der Kunststoffbelag an seiner Unterseite mit einem Tragmaterial, insbesondere einem Stahlblech, abgestützt sein. Es ist auch möglich, die Gleitfläche ohne Kunststoffbelag, also nur als Stahlblech, auszuführen.

An seinem unteren Ende weist die Warenabgabefläche 43 einen Übergabeabschnitt 45 auf, der gemäß dem gezeigten Ausführungsbeispiel horizontal orientiert ist. An dem Übergabeabschnitt 45 werden die Förderbehälter 3 an einen in Warenförderrichtung 27 nachfolgenden Liegeförderer 13 übergeben. Mit dem Liegeförderer 13 werden die entladenen Waren 2 vereinzelt zu der Packstation 14 gefördert.

An der Warenabgabefläche 43 ist eine Seitenführung 46 angeordnet. Die Seitenführung 46 ist durch seitlich an der Warenabgabefläche 43 befestigte Führungsstege gebildet.

Die Förderschiene 24 und die Warenabgabefläche 43 sind entlang eines Parallelabschnitts zumindest abschnittsweise parallel zueinander angeordnet. Entlang des Parallelabschnitts ist der Vertikalabstand A_{V} zwischen der Förderschiene 24 und der darunter angeordneten Warenabgabefläche 43 konstant. Insbesondere ist der Vertikalabstand A_{V} derart festgelegt, dass die entlang der Förderschiene 24 geförderten Förderbehälter 3 an ihrer Unterseite 35 an der Warenabgabefläche 43 aufliegen oder diese zumindest berühren. Die Berührung erfolgt insbesondere mittels der Schließleisten 31, 32 der Förderbehälter 3, insbesondere mit der Hinter-Schließleiste 32.

Im Folgenden wird der Betrieb der Anlage 1, insbesondere der Entladestation 11, näher erläutert.

Waren 2 werden aus dem Warenlager 4 und/oder vom Wareneingang 5 zu der Beladestation 6 gefördert und dort in Förderbehälter 3 beladen. Die beladenen Förderbehälter 3 werden an der Vorrichtung 7 in die Hängefördertechnik 8 aufgegeben. Die beladenen Förderbehälter 3 werden im Warenspeicher 9 gespeichert und/oder in der Sortiereinheit 10 sortiert. Die beladenen Förderbehälter 3 werden zu der Entladestation 11 gefördert und dort entladen oder ohne entladen zu werden weitergefördert und mittels der Rückführstrecke 12 in die Förderanlage 1 zurückgeführt.

Zum Entladen der Förderbehälter 3 werden diese an der Öffnungsposition mittels der Öffnungseinheit 41 geöffnet, indem das Betätigungsmittel 37 betätigt und diese Betätigungskraft mittels des Übertragungsmittels 38 auf die Verschlusseinrichtung 19 übertragen wird. Die Vorder-Schließleiste 31 wird von der Hinter-Schließleiste 32 entkoppelt, so dass die Vorderwand 25 von der Rückwand 26 gelöst und der Förderbehälter 3 an der Unterseite 35 geöffnet wird. Insbesondere ist die Öffnungseinheit 41 derart schaltbar ausgeführt, dass in Abhängigkeit eines von der Steuerungseinheit 42 übermittelten Steuerungssignals eine Betätigung der Öffnungseinheit 41 möglich ist. Es ist insbesondere möglich, dass nicht jeder Förderbehälter 3 geöffnet wird und insbesondere auch Förderbehälter 3 die Öffnungseinheit 41 ungeöffnet passieren können.

Dadurch, dass die Förderbehälter 3 an ihrer Unterseite 35 die Warenabgabefläche 43 berühren, können die Waren 2 aus den geöffneten Förderbehältern 3 schonend unmittelbar auf die Warenabgabefläche 43 abgegeben werden. Die abgegebenen Waren 2 können an der Warenabgabefläche 43 schwerkraftbedingt nach unten zu dem Übergabeabschnitt 45 und von dort auf den Liegeförderer 13 rutschen.

## Patentansprüche

1. Entladestation für eine Förderanlage umfassend
a. eine Hängefördertechnik (8) mit
i. einer Förderschiene (24), die in einem Schrägabschnitt von der Horizontalen abweicht,
ii. einem Förderantrieb und
iii. mehreren mittels des Förderantriebs entlang der Förderschiene (24) geförderten Hängeadaptern (23),
b. mehrere Förderbehälter (3), die jeweils
i. an einem der Hängeadapter (23) hängend förderbar sind,
ii. einen betätigbaren Öffnungsmechanismus (37, 38) aufweisen, mit dem eine Unterseite (35) des Förderbehälters (3) öffenbar ist,
c. eine Öffnungseinheit (41) zum Öffnen der Förderbehälter (3), wobei die Öffnungseinheit (41) entlang des Schrägabschnitts an einer Öffnungsposition angeordnet ist,
d. eine unterhalb der Förderschiene (24) angeordnete Warenabgabefläche (43) zum Abgeben von aus den Förderbehältern (3) abgegebenen Waren (2),
**dadurch gekennzeichnet, dass**
e. die Warenabgabefläche (43) an der Öffnungsposition gegenüber der Horizontalen nach unten abfällt,
f. an der Warenabgabefläche (43) eine Seitenführung (46) für die Förderbehälter (3) angeordnet ist.

2. Entladestation gemäß Anspruch 1, **dadurch gekennzeichnet, dass** die Warenabgabefläche (43) an der Öffnungsposition gegenüber der Horizontalen mit einem ersten Neigungswinkel (n₁) nach unten geneigt ausgeführt ist, wobei gilt n₁ ≥ 45°.

3. Entladestation gemäß einem der vorstehenden Ansprüche, **dadurch gekennzeichnet, dass** die Warenabgabefläche (43) mit einem Vertikalabstand (A_{V}) unterhalb der Förderschiene (24) derart angeordnet ist, dass die Förderbehälter (3) im ungeöffneten Zustand die Warenabgabefläche (43) berühren.

4. Entladestation gemäß Anspruch 3, **dadurch gekennzeichnet, dass** der Vertikalabstand (A_{V}) entlang eines Parallelabschnitts der Förderschiene (24) konstant ist.

5. Entladestation gemäß einem der vorstehenden Ansprüche, **dadurch gekennzeichnet, dass** die Warenabgabefläche (43) statisch ausgeführt ist als Gleitfläche.

6. Entladestation gemäß Anspruch 5, **dadurch gekennzeichnet, dass** die Gleitfläche einen Übergabeabschnitt (45) aufweist, der insbesondere gegenüber der Horizontalen mit einem zweiten Neigungswinkel (n₂) geneigt angeordnet ist, wobei gilt n₂ < n₁, und/oder der zumindest abschnittsweise gekrümmt ausgeführt ist.

7. Entladestation gemäß einem der Ansprüche 1 bis 4, **dadurch gekennzeichnet, dass** die Warenabgabefläche (43) einen Abwärtsförderer aufweist, insbesondere einen Stollengurt oder ein Förderband mit Stoppelementen und/oder mit einer Haftfläche.

8. Entladestation gemäß Anspruch 7, **dadurch gekennzeichnet, dass** der Abwärtsförderer einen Antrieb aufweist mit einer veränderlich einstellbaren Fördergeschwindigkeit.

9. Entladestation gemäß einem der vorstehenden Ansprüche, **dadurch gekennzeichnet, dass** die Öffnungseinheit (41) derart schaltbar ausgeführt ist, dass die Öffnungseinheit (41) einen an der Öffnungsposition angeordneten Förderbehälter (3) in Abhängigkeit eines Stellsignals öffnet oder ungeöffnet passieren lässt.

10. Entladestation gemäß einem der vorstehenden Ansprüche, **dadurch gekennzeichnet, dass** der Schrägabschnitt gegenüber der Horizontalen nach unten abfällt.

11. Förderanlage mit einer Entladestation (11) gemäß einem der vorstehenden Ansprüche und mit einem Liegeförderer (13), der sich insbesondere der Warenabgabefläche (43) fördertechnisch anschließt.

12. Verfahren zum automatisierten Entladen von Förderbehältern (3) in einer Förderanlage (1) gemäß Anspruch 11 umfassend die Verfahrensschritte
- hängendes Fördern von Förderbehältern (3) mittels Hängeadaptern (23) entlang der Förderschiene (24), die zumindest abschnittsweise gegenüber der Horizontalen nach unten abfällt,
- Öffnen mindestens eines Förderbehälters (3) an der Öffnungsposition mittels der Öffnungseinheit (41),
- schwerkraftbedingtes Abgeben der Waren (2) aus den Förderbehältern (3) auf die unterhalb der Förderschiene (23) angeordnete Warenabgabefläche (43), die an der Öffnungsposition gegenüber der Horizontalen nach unten abfällt.

13. Verfahren gemäß Anspruch 12, **dadurch gekennzeichnet, dass** die Förderbehälter (3) stromaufwärts der Öffnungsposition an der Warenabgabefläche (43) anliegend geführt sind.

14. Verfahren gemäß Anspruch 12 oder 13, **dadurch gekennzeichnet, dass** das Öffnen der Förderbehälter (3) in Abhängigkeit der geförderten Ware (2) erfolgt.

## Claims

1. An unloading station for a conveyor facility comprising
a. an overhead conveyor system (8) with
i. a conveyor rail (24) which deviates from the horizontal in an inclined section,
ii. a conveyor drive and
iii. a plurality of overhead adapters (23) conveyed along the conveyor rail (24) by means of the conveyor drive,
b. a plurality of conveying containers (3), each of which
i. are conveyable in a suspended manner on one of the overhead adapters (23),
ii. comprise an operable opening mechanism (37, 38) with which an underside (35) of the conveying container (3) is openable,
c. an opening unit (41) for opening the conveying container (3), wherein the opening unit (41) is arranged along the inclined section at an opening position,
d. a goods discharge surface (43) arranged below the conveyor rail (24) for discharging goods (2) discharged from the conveying containers (3),
**characterized in that**
e. the goods discharge surface (43) slopes downwards relative to the horizontal at the opening position,
f. a side guide (46) for the conveying containers (3) is arranged at the goods discharge surface (43).

2. An unloading station according to claim 1, **characterized in that** the goods discharge surface (43) is designed to be inclined downwards at the opening position with respect to the horizontal at a first angle of inclination (n₁), wherein n₁ ≥ 45°.

3. An unloading station according to any one of the preceding claims, **characterized in that** the goods discharge surface (43) is arranged at a vertical distance (A_{V}) below the conveyor rail (24) in such a manner that the conveying containers (3) touch the goods discharge surface (43) in the unopened state.

4. An unloading station according to claim 3, **characterized in that** the vertical distance (A_{V}) is constant along a parallel section of the conveyor rail (24).

5. An unloading station according to any one of the preceding claims, **characterized in that** the goods discharge surface (43) is designed statically as a sliding surface.

6. An unloading station according to claim 5, **characterized in that** the sliding surface has a transfer section (45) which is arranged to be inclined at a second angle of inclination (n₂) relative to the horizontal, wherein n₂ < n₁, and/or which is designed to be curved at least in sections.

7. An unloading station according to any one of claims 1 to 4, **characterized in that** the goods discharge surface (43) has a downward conveyor, in particular a cleated belt or a conveyor belt with stopping members and/or with an adhesive surface.

8. An unloading station according to claim 7, **characterized in that** the downward conveyor has a drive with a variably adjustable conveying speed.

9. An unloading station according to any one of the preceding claims, **characterized in that** the opening unit (41) is designed to be switchable in such a manner that the opening unit (41) opens a conveying container (3) arranged at the opening position or allows it to pass unopened depending on a control signal.

10. An unloading station according to any one of the preceding claims, **characterized in that** the inclined section slopes downwards in relation to the horizontal.

11. A conveyor facility comprising an unloading station (11) according to any one of the preceding claims and a horizontal conveyor (13), which in particular adjoins the goods discharge surface (43) in terms of conveying technology.

12. A method for the automated unloading of conveying containers (3) in a conveyor facility (1) according to claim 11, comprising the method steps of
- suspended conveying of conveying containers (3) by means of overhead adapters (23) along the conveyor rail (24) which slopes downwards at least in sections relative to the horizontal,
- opening of at least one conveying container (3) at the opening position by means of the opening unit (41),
- gravity-induced discharge of the goods (2) from the conveying containers (3) onto the goods discharge surface (43) arranged below the conveyor rail (23), which goods discharge surface (43) slopes downwards relative to the horizontal at the opening position.

13. A method according to claim 12, **characterized in that** the conveying containers (3) are guided to abut against the goods discharge surface (43) upstream of the opening position.

14. A method according to claim 12 or 13, **characterized in that** the conveying containers (3) are opened in dependence on the conveyed goods (2).

## Revendications

1. Poste de déchargement pour une installation de transport, comprenant
a. un système de transport suspendu (8) comportant
i. un rail de transport (24) qui s'écarte de l'horizontale dans une section inclinée,
ii. un entraînement de transport, et
iii. plusieurs adaptateurs de suspension (23) transportés le long du rail de transport (24) au moyen de l'entraînement de transport,
b. plusieurs conteneurs de transport (3) qui, chacun,
i. peuvent être transportés de manière suspendue sur l'un des adaptateurs de suspension (23),
ii. présentent un mécanisme d'ouverture actionnable (37, 38) permettant d'ouvrir une face inférieure (35) du conteneur de transport (3),
c. une unité d'ouverture (41) destinée à ouvrir les conteneurs de transport (3), l'unité d'ouverture (41) étant disposée le long de la section inclinée à une position d'ouverture,
d. une surface de déchargement de marchandises (43), disposée sous le rail de transport (24), destinée à recevoir les marchandises (2) déchargées des conteneurs de transport (3),
**caractérisé en ce que**
e. la surface de déchargement de marchandises (43) présente une pente descendante par rapport à l'horizontale au niveau de la position d'ouverture,
f. un guide latéral (46) pour les conteneurs de transport (3) est disposé sur la surface de déchargement de marchandises (43).

2. Poste de déchargement selon la revendication 1, **caractérisé en ce que** la surface de déchargement de marchandises (43) est inclinée vers le bas par rapport à l'horizontale selon un premier angle d'inclinaison (n₁), avec n₁ ≥ 45°, au niveau de la position d'ouverture.

3. Poste de déchargement selon l'une des revendications précédentes, **caractérisé en ce que** la surface de déchargement de marchandises (43) est disposée à une distance verticale (A_{V}) en dessous du rail de transport (24), de telle sorte que les conteneurs de transport (3) à l'état fermé touchent la surface de déchargement de marchandises (43).

4. Poste de déchargement selon la revendication 3, **caractérisé en ce que** la distance verticale (A_{V}) est constante le long d'une section parallèle du rail de transport (24).

5. Poste de déchargement selon l'une des revendications précédentes, **caractérisé en ce que** la surface de déchargement de marchandises (43) est réalisée de manière statique sous la forme d'une surface de glissement.

6. Poste de déchargement selon la revendication 5, **caractérisé en ce que** la surface de glissement présente une section de transfert (45) qui est notamment disposée de manière inclinée par rapport à l'horizontale selon un deuxième angle d'inclinaison (n₂), avec n₂ < n₁, et/ou qui est courbée au moins par sections.

7. Poste de déchargement selon l'une des revendications 1 à 4, **caractérisé en ce que** la surface de déchargement de marchandises (43) présente un transporteur descendant, notamment une courroie crantée ou une bande transporteuse dotée d'éléments de cramponnage et/ou d'une surface adhésive.

8. Poste de déchargement selon la revendication 7, **caractérisé en ce que** le transporteur descendant présente un entraînement à vitesse de transport réglable de manière variable.

9. Poste de déchargement selon l'une des revendications précédentes, **caractérisé en ce que** l'unité d'ouverture (41) est conçue commutable de telle sorte que l'unité d'ouverture (41) ouvre un conteneur de transport (3) disposé à la position d'ouverture ou le laisse passer sans l'ouvrir en fonction d'un signal de commande.

10. Poste de déchargement selon l'une des revendications précédentes, **caractérisé en ce que** la section inclinée présente une pente descendante par rapport à l'horizontale.

11. Installation de transport comprenant un poste de déchargement (11) selon l'une des revendications précédentes et un transporteur à plat (13) qui se raccorde, notamment du point de vue du transport, à la surface de déchargement de marchandises (43).

12. Procédé de déchargement automatisé de conteneurs de transport (3) dans une installation de transport (1) selon la revendication 11, comprenant les étapes de procédé suivantes :
- transport suspendu de conteneurs de transport (3) au moyen d'adaptateurs de suspension (23) le long du rail de transport (24) qui présente, au moins par sections, une pente descendante par rapport à l'horizontale,
- ouverture d'au moins un conteneur de transport (3) à la position d'ouverture au moyen de l'unité d'ouverture (41),
- déchargement par gravité des marchandises (2) depuis les conteneurs de transport (3) sur la surface de déchargement de marchandises (43) disposée en dessous du rail de transport (23), laquelle présente une pente descendante par rapport à l'horizontale au niveau de la position d'ouverture.

13. Procédé selon la revendication 12, **caractérisé en ce que** les conteneurs de transport (3) sont guidés en appui contre la surface de déchargement de marchandises (43) en amont de la position d'ouverture.

14. Procédé selon la revendication 12 ou 13, **caractérisé en ce que** l'ouverture des conteneurs de transport (3) s'effectue en fonction de la marchandise (2) transportée.
